# EUROPEAN PATENT APPLICATION

(11) **EP 4 813 678 A1**
(43) Date of publication of application: **30.09.2026**
(21) Application number: 26168322.1
(22) Date of filing: 27.03.2026
(51) Int. Cl.: B60H 1/00

(54) **AIR INTAKE SYSTEM, HEATING, VENTILATION AND/OR AIR CONDITIONING DEVICE AND VEHICLE**

(30) Priority: 27.03.2025 CN 202510376711
(71) Applicant: Valeo Electrification, 95892 Cergy Pontoise (FR)
(72) Inventor: LIN, Qinghua, Shashi, 434007 (CN); BAO, Tao, Shashi, 434007 (CN); XIAO, Yu, Shashi, 434007 (CN); ZHANG, Junxin, Shashi, 434007 (CN)
(74) Representative: Valeo Powertrain Systems

(57) **Abstract**

An air intake system (100), comprising: a housing (10), comprising a first inlet (11), a second inlet (12), a third inlet (13), a first outlet (14) and a second outlet (15); a first air flap (20), which is pivotable between a first position and a second position, and in the first position, communicating only with the first inlet (11), and in the second position, communicating only with the third inlet (13); a second air flap (30), which is pivotable between a first position and a second position, and in the first position, communicating only with the second inlet (12), and in the second position, communicating only with the third inlet (13). The present disclosure further relates to a heating, ventilation and/or air conditioning device and a vehicle.

## Description

### Technical Field

The present disclosure relates to an air intake system, and a heating, ventilation and/or air conditioning device comprising such an air intake system. The present disclosure further relates to a vehicle comprising such a heating, ventilation and/or air conditioning device.

### Background Art

Vehicles are typically fitted with a heating, ventilation and/or air conditioning device for regulating the environment inside the vehicle cabin. Air of the heating, ventilation and/or air conditioning device is air sucked in by an air intake system, comprising fresh air (i.e. air outside the vehicle) or internally circulated air (i.e. air inside the vehicle). The physical characteristics of the two types of air are significantly different: the temperature of the internally circulated air is closer to a target set temperature, and the internally circulated air is able to respond quickly to temperature regulation requirements; however, the relative humidity thereof is significantly higher than that of the fresh air. If the internally circulated air is conveyed out from an air outlet near the front windscreen of the vehicle, condensation fogging occurs very easily on the surface of the windscreen.

Hence, as is known, an air intake system of a heating, ventilation and/or air conditioning device is capable of separating fresh air and internally circulated air, and conveying the air out in different portions of the interior of the cabin, to adapt to different environment regulation requirements. However, in the prior art, air separation devices in air intake systems of heating, ventilation and/or air conditioning devices have the disadvantages of being structurally complex and insufficiently compact. For example, a known air separation device comprising three coaxial air flaps, which are complex in structure and require a larger space for mounting, is not suitable for a heating, ventilation and/or air conditioning device with an air intake system of a limited volume.

### Summary of the Invention

Thus, the present disclosure is intended to solve the abovementioned problems, with the objective of providing a novel air intake system which is capable of separating fresh air and internally circulated air, and has a compact structure and requires less mounting space.

The objective is achieved by an air intake system according to one embodiment of the present disclosure, the air intake system comprising: a housing, comprising a first inlet, a second inlet, a third inlet, a first outlet and a second outlet; a first air flap, which is pivotable between a first position and a second position, and when the first air flap is in the first position, the first outlet communicating only with the first inlet, and when the first air flap is in the second position, the first outlet communicating only with the third inlet; and a second air flap, which is pivotable between a first position and a second position, and when the second air flap is in the first position, the second outlet communicating only with the second inlet, and when the second air flap is in the second position, the second outlet communicating only with the third inlet.

One of the objectives of the present disclosure is to provide an air intake system with a compact structure that is able to separate fresh air and internally circulated air, reducing the space occupied by the air intake system. The air intake system according to the present disclosure comprises two air flaps, which are capable of pivoting between a first position and a second position, controlling communication or closure between two outlets and first to third inlets. Thus, the air intake system is able to supply air sucked in from the three inlets to the two outlets, respectively, according to requirements, to meet the zoned environment regulation requirements of a heating, ventilation and/or air conditioning device. Compared with an air intake system comprising three air flaps, the intake system according to the present disclosure dispenses with one air flap, is more compact in structure, requires less mounting space, and reduces component costs.

The air intake system according to the present disclosure may also have one or more of the following features alone or in combination.

According to an optional embodiment of the present disclosure, the first inlet and the second inlet are circulated air inlets, and the third inlet is a fresh air inlet; or the first inlet and the second inlet are fresh air inlets, and the third inlet is a circulated air inlet. That is, two inlets of the housing can be used for sucking in one of fresh air or internally circulated air, and the other inlet can be used for sucking in the other of fresh air or internally circulated air, and the two inlets that suck in the same type of air respectively communicate with two outlets, and the other inlet, which sucks in different air, can communicate with the two outlets. Thus, the air intake system is able to supply fresh air or internally circulated air to the two outlets, respectively, as required, to separate the fresh air or internally circulated air within the air intake system.

According to one optional embodiment of the present disclosure, the housing has a dividing wall, the dividing wall defining a first passage and a second passage inside the housing; the third inlet communicates with the first outlet through the first passage and with the second outlet through the second passage; when the first air flap is in the first position, the first air flap closes the first passage and opens the first inlet, and when the first air flap is in the second position, the first air flap opens the first passage and closes the first inlet; when the second air flap is in the first position, the second air flap closes the second passage and opens the second inlet, and when the second air flap is in the second position, the second air flap opens the second passage and closes the second inlet.

According to one optional embodiment of the present disclosure, the first air flap pivots about a first axis of rotation, and the second air flap pivots about a second axis of rotation, the first axis of rotation being different from the second axis of rotation. Therefore, the first air flap and the second air flap are not coaxially arranged, and the dimensions of the two are not superimposed along a common axis of rotation, thereby helping to reduce the volume of the air intake system.

According to an optional embodiment of the present disclosure, the first air flap and the first inlet are located on one side of the dividing wall, and the second air flap and the second inlet are located on the other side of the dividing wall.

According to an optional embodiment of the present disclosure, the air intake system further comprises a filter, the filter being arranged downstream of the dividing wall and upstream of the first outlet and the second outlet in a direction of an airflow.

According to an optional embodiment of the present disclosure, the dividing wall is substantially aligned with a middle position of the filter.

According to an optional embodiment of the present disclosure, the housing further comprises an air guide member arranged inside the first outlet, and the second outlet is defined by the air guide member.

According to an optional embodiment of the present disclosure, the air intake system further comprises a drive system, the drive system comprising a micro electric motor, a cam, a first lever coupled to the first air flap, and a second lever coupled to the second air flap; the micro electric motor is directly coupled to the first lever to drive the first air flap, and the micro electric motor is coupled to the second lever by the cam to drive the second air flap.

The present disclosure further proposes a heating, ventilation and/or air conditioning device, comprising an upper level air outlet, a lower level air outlet and the air intake system as described above, wherein an airflow flowing out from the first outlet is guided to the upper level air outlet, and an airflow flowing out from the second outlet is guided to the lower level air outlet.

According to an optional embodiment of the present disclosure, the heating, ventilation and/or air conditioning device has an internal circulating mode, an external circulating mode and a split-level mode; in the internal circulating mode, the first air flap is in the first position, and the second air flap is in the first position; in the external circulating mode, the first air flap is in the second position, and the second air flap is in the second position; in the split-level mode, the first air flap is in the second position, and the second air flap is in the first position.

According to an optional embodiment of the present disclosure, the first inlet and the second inlet are circulated air inlets, and the third inlet is a fresh air inlet, and the heating, ventilation and/or air conditioning device has an internal circulating mode, an external circulating mode and a split-level mode; in the internal circulating mode, the first air flap and the second air flap are in the first position; in the external circulating mode, the first air flap and the second air flap are in the second position; in the split-level mode, the first air flap is in the second position, and the second air flap is in the first position.

According to an optional embodiment of the present disclosure, the first inlet and the second inlet are fresh air inlets, and the third inlet is a circulated air inlet, and the heating, ventilation and/or air conditioning device has an internal circulating mode, an external circulating mode and a split-level mode; in the internal circulating mode, the first air flap and the second air flap are in the second position; in the external circulating mode, the first air flap and the second air flap are in the first position; in the split-level mode, the first air flap is in the first position, and the second air flap is in the second position.

The present disclosure further proposes a vehicle, comprising the heating, ventilation and/or air conditioning device mentioned above.

### Brief Description of the Drawings

The foregoing and other features and advantages of the present disclosure will become more apparent from the following detailed description of exemplary embodiments with reference to the drawings, and the description and the drawings are for illustrative purposes only and are not intended to limit the scope of the present disclosure in any way. The drawings below are not drawn to scale according to actual dimensions but rather focus on showing the main purpose of the present disclosure. In the figures:
Fig. 1 shows an air intake system according to an exemplary embodiment of the present disclosure;
Fig. 2 shows a sectional view of the air intake system;
Fig. 3A shows the air intake system schematically in a planar view, wherein both a first air flap and a second air flap are in a first position;
Fig. 3B shows the air intake system schematically in a planar view, wherein both the first air flap and the second air flap are in a second position;
Fig. 3C shows the air intake system schematically in a planar view, wherein the first air flap is in the second position, and the second air flap is in the first position.

In all of the drawings, identical or similar components are indicated by identical numerals.

### Detailed Description of the Invention

To clarify the objective, technical solutions and advantages of embodiments of the present disclosure, the technical solutions of embodiments of the present disclosure are described clearly and completely below in conjunction with the drawings of embodiments of the present disclosure.

Unless defined otherwise, the technical or scientific terms used herein shall have the common meanings as understood by those of ordinary skill in the field to which the present disclosure belongs. Words such as "one", "a" or "the" used in the description and the claims of the patent application disclosed herein do not indicate a quantity limit, but mean that there is at least one. Words such as "comprise" or "include" mean that the element or object appearing before the word encompasses the elements or objects and their equivalents listed after the word, without excluding other elements or objects. Although expressions such as "first" and "second" are used to describe various elements of the present disclosure, they are only intended to distinguish one component from another, rather than limiting the sequence or importance of the corresponding elements. Without departing from the scope of the present disclosure, "first element" may be written as "second element", and, similarly, "second element" may be written as "first element".

In the description of the present disclosure, it is necessary to understand that the orientation or position relationship indicated by a term such as "up", "down", "left", "right", "inside", and "outside" is based on the orientation or position relationship shown in the drawings, or the orientation or position relationship of usual placement when the disclosed product is in use, or the orientation or position relationship that is commonly understood by those skilled in the art, and is only for the convenience of describing the present disclosure and simplifying the description, rather than indicating or implying that the device or element referred to must have a specific orientation or be constructed and operated in a specific orientation, so must not be construed as limiting the present disclosure.

For ease of description, the drawings of the disclosure correspondingly simplify or omit components irrelevant to the description of the disclosure. These omitted or simplified components do not affect the understanding of the content of the present disclosure by a person skilled in the art.

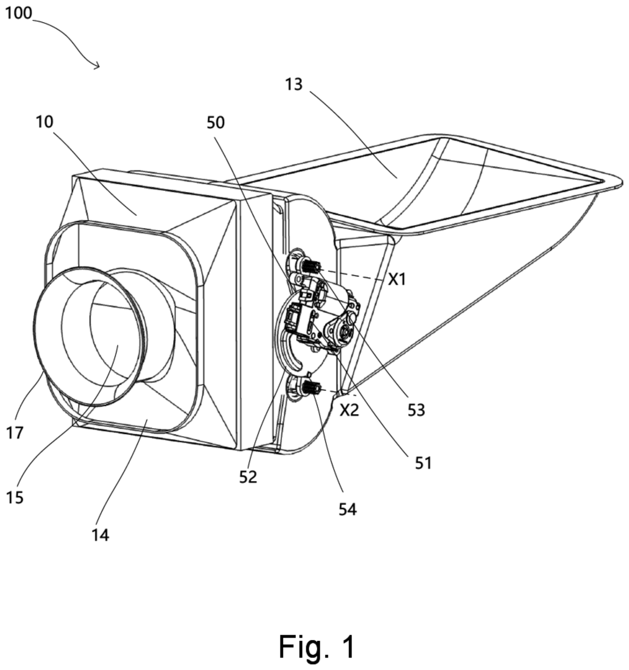

As shown in Figs. 1 - 2, the present disclosure proposes an air intake system 100 for a heating, ventilation and/or air conditioning device. The heating, ventilation and/or air conditioning device is a dual-level air conditioner in particular, and may be used in a vehicle, e.g. a motor vehicle, an electric vehicle or a hybrid vehicle. The air intake system 100 comprises a housing 10 and various components arranged inside and outside the housing 10. The present disclosure aims to cause, through the cooperation of the housing 10 and the various components, a desired airflow to reach a desired outlet according to actual needs, so as to meet the requirements of a driver and passengers in a cabin of the vehicle for control and regulation of air and temperature inside the vehicle cabin, and can at the same time reduce the volume of the air intake system 100. This is especially important when the size of the intake system 100 is limited.

In particular, the housing 10 comprises a first inlet 11, a second inlet 12, a third inlet 13, a first outlet 14 and a second outlet 15. The first inlet 11 and the second inlet 12 are used to suck in one of internally circulated air or fresh air, and the third inlet 13 is used to suck in the other of the internally circulated air or fresh air. Without loss of generality, it will be assumed hereinafter that the first inlet 11 and the second inlet 12 are circulated air inlets, used for sucking in internally circulated air from inside the vehicle cabin, and that the third inlet 13 is a fresh air inlet, used for sucking in fresh air from outside the vehicle. The first air outlet 14 and the second air outlet 15 may supply separate airflows downstream of the air intake system 100.

Components arranged inside the housing 10 of the air intake system 100 comprise a first air flap 20 and a second air flap 30. The first air flap 20 is pivotable between a first position and a second position, for adjusting the connectivity of the first outlet 14. When the first air flap 20 is in the first position, the first outlet 14 communicates only with the first inlet 11, thereby supplying internally circulated air sucked in from the first inlet 11. When the first air flap 20 is in the second position, the first outlet 14 communicates only with the third inlet 13, thereby supplying fresh air sucked in from the third inlet 13. The second air flap 30 is also pivotable between a first position and a second position, for adjusting the connectivity of the second outlet 15. When the second air flap 30 is in the first position, the second outlet 15 communicates only with the second inlet 12, thereby supplying internally circulated air sucked in from the second inlet 12. When the second air flap 30 is in the second position, the second outlet 15 communicates only with the third inlet 13, thereby supplying fresh air sucked in from the third inlet 13.

As described above, the intake system 100 of the present disclosure is capable of selectively connecting two outlets with three inlets through two air flaps, such that the two outlets are capable of supplying fresh air and internally circulated air independently of each other. The construction of the air intake system 100 according to the present disclosure is simpler, compact and saves on component costs, compared to existing air intake systems having three air flaps.

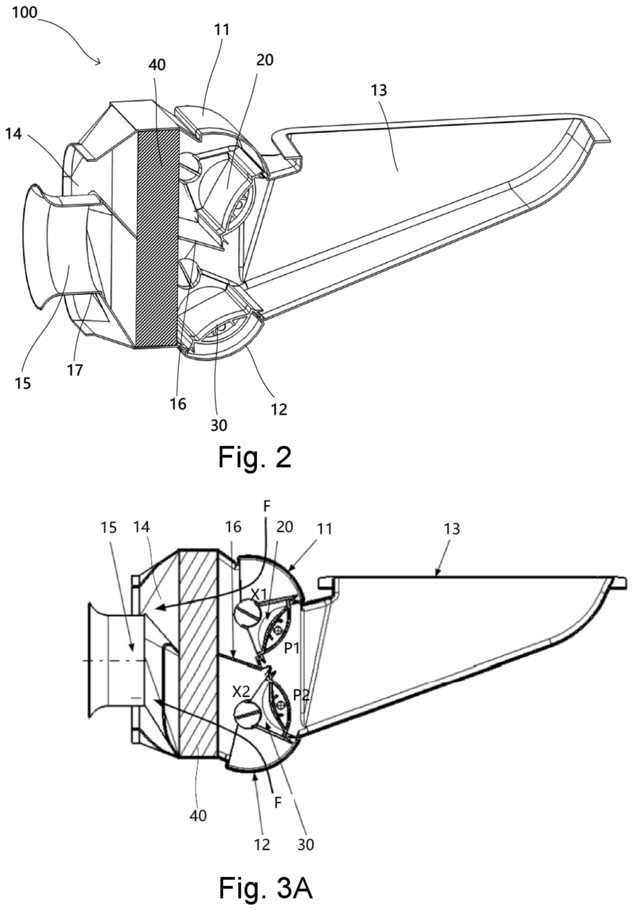

As shown in Figs. 2 - 3C, in some embodiments, the housing 10 also has a dividing wall 16, the dividing wall 16 defining a first passage P1 and a second passage P2 inside the housing 10. The third inlet 13 communicates with the first outlet 14 through the first passage P1 and with the second outlet 15 through the second passage P2. In addition, the first air flap 20 and the first inlet 11 are located on one side of the dividing wall 16, and the second air flap 30 and the second inlet 12 are located on the other side of the dividing wall 16. That is, the dividing wall 16 serves to split the housing 10 of the air intake system 100 into levels.

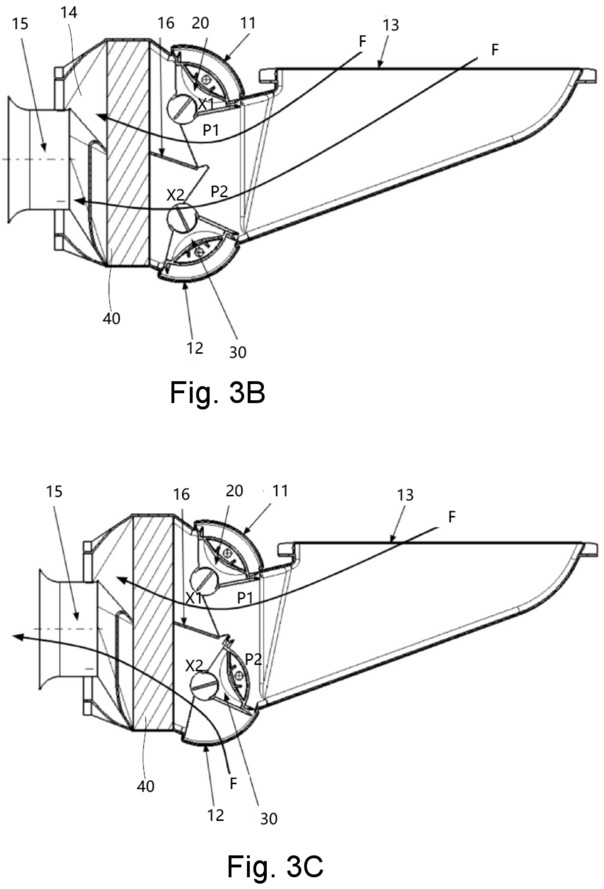

In some embodiments, when the first air flap 20 is in the first position, the first air flap 20 closes the first passage P1 and opens the first inlet 11. At this time, the first outlet 14 communicates only with the first inlet 11, and supplies internally circulated air sucked in from the first inlet 11 (see the upper airflow F shown in Fig. 3A). When the first air flap 20 is in the second position, the first air flap 20 opens the first passage P1 and closes the first inlet 11. At this time, the first outlet 14 communicates only with the third inlet 13, and supplies fresh air sucked in from the third inlet 13 (see the upper airflow F shown in Figs. 3B and 3C). When the second air flap 30 is in the first position, the second air flap 30 closes the second passage P2 and opens the second inlet 12. At this time, the second outlet 15 communicates only with the second inlet 12, and supplies internally circulated air sucked in from the second inlet 12 (see the lower airflow F shown in Figs. 3A and 3C). When the second air flap 30 is in the second position, the second air flap 30 opens the second passage P2 and closes the second inlet 12. At this time, the second outlet 15 communicates only with the third inlet 13, and supplies fresh air sucked in from the third inlet 13 (see the lower airflow F shown in Fig. 3B).

In addition, it should be noted that the first air flap 20 and the second air flap 30 of the air intake system 100 have different axes. The first air flap 20 pivots about a first axis of rotation X1, and the second air flap 30 pivots about a second axis of rotation X2. The first axis of rotation X1 and the second axis of rotation X2 are offset relative to each other and are not coaxial. In a preferred embodiment, the first axis of rotation X1 and the second axis of rotation X2 are substantially parallel. Fig. 2 - Fig. 3C show that the first axis of rotation X1 of the first air flap 20 is substantially offset vertically from the second axis of rotation X2 of the second air flap 30. It will be appreciated that the offset between the first axis of rotation X1 and the second axis of rotation X2 may have a horizontal component, or be substantially in a horizontal direction. Due to such a non-coaxial construction, the dimensions of the first air flap 20 and the second air flap 30 do not overlap, helping to reduce the overall dimensions of the air intake system 100 and being better adapted to limited mounting dimensions.

The pivoting of the first air flap 20 and the second air flap 30 is carried out by means of a drive system 50 of the air intake system 100. Referring to Fig. 1, the drive system 50 comprises a micro electric motor 51, a cam 52, a first lever 53 and a second lever 54. The first lever 53 is coupled to the first air flap 20, and the second lever 54 is coupled to the second air flap 30. The micro electric motor 51 is directly coupled to the first lever 53 to drive the first air flap 20 to pivot, and is coupled to the second lever 54 by the cam 52 to drive the second air flap 30 to pivot. With a suitable design of the cam 52, when the micro electric motor 51 rotates to a predetermined angle, the first air flap 20 and the second air flap 30 will be in a predetermined first or second position.

Referring to Fig. 2, in some embodiments, the air intake system 100 further comprises a filter 40, which is arranged downstream of the dividing wall 16 and upstream of the first outlet 14 and the second outlet 15 in a direction of an airflow. Before entering the first outlet 14 and the second outlet 15, the airflow first flows through the filter 40 and is filtered by the filter 40.

Downstream of the filter 40, the first outlet 14 and the second outlet 15 of the housing 10 may be formed in multiple ways. In the embodiment shown in Fig. 2, the first outlet 14 is formed directly on the housing 10, and the second outlet 15 is defined by an air guide member 17 arranged inside the first outlet 14. It will be appreciated that the first outlet 14 and second outlet 15 may also be both formed directly on the housing 10.

Further referring to Fig. 2, upstream of the filter 40, the dividing wall 16 contacts the filter 40 at approximately a middle position of the filter 40, thereby substantially aligning with the middle position of the filter 40. That is, the filter 40 allocates substantially the same filtering area to the air flowing in through the first air flap 20 and the air flowing in through the second air flap 30. Similarly, downstream of the filter 40, the filtering areas allocated by the filter 40 for the first outlet 14 and the second outlet 15 are also substantially the same. According to actual requirements, the filtering areas allocated by the filter 40 for the first air flap 20 and the second air flap 30 may also be unequal, or the filtering areas allocated for the first outlet 14 and the second outlet 15 may also be unequal.

The above air intake system 100 can be used for a heating, ventilation and/or air conditioning device with a dual-level mode. In particular, such a heating, ventilation and/or air conditioning device comprises an upper level air outlet and a lower level air outlet. The upper level air outlet may be a face-blowing air outlet (and may comprise a front face-blowing air outlet and/or a rear face-blowing air outlet) and/or a defrosting air outlet, and the lower level air outlet may be a feet-blowing air outlet (and may comprise a front feet-blowing air outlet and/or a rear feet-blowing air outlet). An airflow that flows out from the first outlet 14 of the air intake system 100 is guided to the upper level air outlet, and an airflow that flows out from the second outlet 15 is guided to the lower level air outlet.

Operating modes of the heating, ventilation and/or air conditioning device at least comprise three of the following: an internal circulating mode, an external circulating mode and a split-level mode.

In the internal circulating mode, as shown in Fig. 3A, both the first air flap 20 and the second air flap 30 of the air intake system 100 are in the first position. The first outlet 14 communicates with the first inlet 11, and the second outlet 15 communicates with the second inlet 12. Internally circulated air sucked in from the first inlet 11 is supplied to the upper level air outlet through the first outlet 14, and internally circulated air sucked in from the second inlet 12 is supplied to the lower level air outlet through the second outlet 15. The internal circulating mode is able to respond quickly to temperature regulation requirements.

In the external circulating mode, as shown in Fig. 3B, both the first air flap 20 and the second air flap 30 of the air intake system 100 are in the second position. Both the first outlet 14 and the second outlet 15 communicate with the third inlet 13. Fresh air sucked in from the third inlet 13 is supplied to both the upper level air outlet and the lower level air outlet through the first outlet 14 and the second outlet 15. The external circulating mode is able to reduce the carbon dioxide concentration in the vehicle, giving the driver and passengers a feeling of freshness.

In the split-level mode, as shown in Fig. 3C, the first air flap 20 of the air intake system 100 is in the second position, and the second air flap 30 is in the first position. The first outlet 14 communicates with the third inlet 13, and the second outlet 15 communicates with the second inlet 12. Fresh air sucked in from the third inlet 13 is supplied to the upper level air outlet through the first outlet 14, and internally circulated air sucked in from the second inlet 12 is supplied to the lower level air outlet through the second outlet 15. In such a split-level mode, fresh air is blown toward the heads of the driver and passengers, giving the driver and passengers a feeling of freshness. Furthermore, the air that comes into contact with the vehicle windscreen is also fresh air, with a lower humidity, which is able to prevent fogging, and rapid defrosting is also possible when fogging has already occurred. In another aspect, the air that comes into contact with the feet and legs of the driver and passengers is internally circulated air that has a temperature closer to a target set temperature, allowing the driver and passengers to quickly feel warm or cool. The air intake system 100 is described above with the first inlet 11 and the second inlet 12 of the housing 10 as circulated air inlets and the third inlet 13 as a fresh air inlet. It is conceivable that the first inlet 11 and the second inlet 12 of the housing 10 may also be configured as fresh air inlets, and the third inlet 13 as a circulated air inlet. In this case, both the first air flap 20 and the second air flap 30 are in the second position when the heating, ventilation and/or air conditioning device is in the internal circulating mode; both the first air flap 20 and the second air flap 30 are in the first position when the heating, ventilation and/or air conditioning device is in the external circulating mode; and the first air flap 20 is in the first position, and the second air flap 30 is in the second position when the heating, ventilation and/or air conditioning device is in the split-level mode.

According to another aspect of the present disclosure, a vehicle is proposed, which comprises the heating, ventilation and/or air conditioning device as described previously.

The above are merely demonstrative embodiments of the present disclosure, and are not intended to limit the protection scope of the present disclosure, which is determined by the appended claims. Those skilled in the art will understand that changes and improvements can be made to the various embodiments described herein, without departing from the scope of the present disclosure as defined in the appended claims. In addition, for clarity and conciseness, descriptions of familiar functions and structures may be omitted.

Finally, it should also be understood that certain technical features in the embodiments might not be necessary for solving a specific technical problem, so these technical features could be absent or omitted without affecting the solution of the technical problem or the formation of the technical solution; furthermore, features, elements and/or functions of one embodiment could be suitably combined, integrated or coordinated with features, elements and/or functions of one or more other embodiments, unless such combination, integration or coordination cannot be implemented.

## Claims

1. Air intake system (100), **characterized in that** the air intake system (100) comprises:
a housing (10), comprising a first inlet (11), a second inlet (12), a third inlet (13), a first outlet (14) and a second outlet (15);
a first air flap (20), the first air flap (20) being pivotable between a first position and a second position, and when the first air flap (20) is in the first position, the first outlet (14) communicating only with the first inlet (11), and when the first air flap (20) is in the second position, the first outlet (14) communicating only with the third inlet (13);
a second air flap (30), the second air flap (30) being pivotable between a first position and a second position, and when the second air flap (30) is in the first position, the second outlet (15) communicating only with the second inlet (12), and when the second air flap (30) is in the second position, the second outlet (15) communicating only with the third inlet (13).

2. Air intake system (100) according to Claim 1, **characterized in that**
the first inlet (11) and the second inlet (12) are circulated air inlets, and the third inlet (13) is a fresh air inlet; or
the first inlet (11) and the second inlet (12) are fresh air inlets, and the third inlet (13) is a circulated air inlet.

3. Air intake system (100) according to Claim 1 or 2, **characterized in that**
the housing (10) has a dividing wall (16), the dividing wall (16) defining a first passage (P1) and a second passage (P2) inside the housing (10),
the third inlet (13) communicates with the first outlet (14) through the first passage (P1) and with the second outlet (15) through the second passage (P2),
when the first air flap (20) is in the first position, the first air flap (20) closes the first passage (P1) and opens the first inlet (11), and when the first air flap (20) is in the second position, the first air flap (20) opens the first passage (P1) and closes the first inlet (11),
when the second air flap (30) is in the first position, the second air flap (30) closes the second passage (P2) and opens the second inlet (12), and when the second air flap (30) is in the second position, the second air flap (30) opens the second passage (P2) and closes the second inlet (12).

4. Air intake system (100) according to Claim 1 or 2, **characterized in that**
the first air flap (20) pivots about a first axis of rotation (X1), and the second air flap (30) pivots about a second axis of rotation (X2), the first axis of rotation (X1) being different from the second axis of rotation (X2).

5. Air intake system (100) according to Claim 3, **characterized in that**
the first air flap (20) and the first inlet (11) are located on one side of the dividing wall (16), and the second air flap (30) and the second inlet (12) are located on the other side of the dividing wall (16).

6. Air intake system (100) according to Claim 3, **characterized in that**
the air intake system (100) further comprises a filter (40), the filter (40) being arranged downstream of the dividing wall (16) and upstream of the first outlet (14) and the second outlet (15) in a direction of an airflow.

7. Air intake system (100) according to Claim 6, **characterized in that**
the dividing wall (16) is substantially aligned with a middle position of the filter (40).

8. Air intake system (100) according to Claim 1 or 2, **characterized in that**
the housing (10) further comprises an air guide member (17) arranged inside the first outlet (14), and the second outlet (15) is defined by the air guide member (17).

9. Air intake system (100) according to Claim 1 or 2, **characterized in that**
the air intake system (100) further comprises a drive system (50), the drive system (50) comprising a micro electric motor (51), a cam (52), a first lever (53) coupled to the first air flap (20), and a second lever (54) coupled to the second air flap (30),
the micro electric motor (51) is directly coupled to the first lever (53) to drive the first air flap (20), and
the micro electric motor (51) is coupled to the second lever (54) by the cam (52) to drive the second air flap (30).

10. Heating, ventilation and/or air conditioning device, **characterized in that** the heating, ventilation and/or air conditioning device comprises an upper level air outlet, a lower level air outlet and the air intake system (100) according to any one of Claims 1 to 9, and an airflow flowing out from the first outlet (14) is guided to the upper level air outlet, and an airflow flowing out from the second outlet (15) is guided to the lower level air outlet.

11. Heating, ventilation and/or air conditioning device according to Claim 10, **characterized in that** the first inlet (11) and the second inlet (12) are circulated air inlets, and the third inlet (13) is a fresh air inlet, and
the heating, ventilation and/or air conditioning device has an internal circulating mode, an external circulating mode and a split-level mode,
in the internal circulating mode, the first air flap (20) is in the first position, and the second air flap (30) is in the first position,
in the external circulating mode, the first air flap (20) is in the second position, and the second air flap (30) is in the second position,
in the split-level mode, the first air flap (20) is in the second position, and the second air flap (30) is in the first position.

12. Heating, ventilation and/or air conditioning device according to Claim 10, **characterized in that** the first inlet (11) and the second inlet (12) are fresh air inlets, and the third inlet (13) is a circulated air inlet, and
the heating, ventilation and/or air conditioning device has an internal circulating mode, an external circulating mode and a split-level mode,
in the internal circulating mode, the first air flap (20) is in the second position, and the second air flap (30) is in the second position,
in the external circulating mode, the first air flap (20) is in the first position, and the second air flap (30) is in the first position,
in the split-level mode, the first air flap (20) is in the first position, and the second air flap (30) is in the second position.

13. Vehicle, **characterized by** comprising the heating, ventilation and/or air conditioning device according to any one of Claims 10 to 12.
